# EUROPEAN PATENT APPLICATION

(11) **EP 4 683 061 A2**
(43) Date of publication of application: **21.01.2026**
(21) Application number: 25152514.3
(22) Date of filing: 17.01.2025
(51) Int. Cl.: H01M 50/172, H01M 50/55, H01M 50/176, H01M 50/533

(54) **SECONDARY BATTERY AND BATTERY PACK INCLUDING THE SAME**

(30) Priority: 17.07.2024 KR 20240094672
(71) Applicant: SAMSUNG SDI CO., LTD., Yongin-si, Gyeonggi-do 17084 (KR)
(72) Inventor: Lee, Young Jin, 16678 Suwon-si, Gyeonggi-do (KR); Moon, Dae Yon, 16678 Suwon-si, Gyeonggi-do (KR); Yeom, Gil Choun, 16678 Suwon-si, Gyeonggi-do (KR)
(74) Representative: Gulde & Partner

(57) **Abstract**

A secondary battery includes: a case; an electrode assembly inside the case and having a first electrode and a second electrode; a first tab member connected to the first electrode and extending from the electrode assembly; a cap plate coupled to the case and facing the electrode assembly; a first current collector between the electrode assembly and the cap plate and connected to the first tab member; and a first terminal extending from the first current collector and configured to be deformable.

## Description

### BACKGROUND

### 1. Field of the Invention

Aspects of some embodiments of the present disclosure relate to a secondary battery and a battery pack including the same.

### 2. Discussion of Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above information disclosed in this Background section is only for enhancement of understanding of the background and therefore the information discussed in this Background section does not necessarily constitute prior art.

### SUMMARY

Aspects of some embodiments of the present disclosure include a secondary battery and a battery pack including the same, in which the number of parts can be relatively decreased.

These and other aspects and features of embodiments according to the present disclosure will be described in more detail or will be apparent from the following description of some embodiments of the present disclosure.

A secondary battery according to a first aspect of the present disclosure includes a case, an electrode assembly inside the case and having a first electrode and a second electrode, a first tab member connected to the first electrode and extending from the electrode assembly, a cap plate coupled to the case and facing the electrode assembly, a first current collector between the electrode assembly and the cap plate and connected to the first tab member, and a first terminal extending from the first current collector and provided to be deformable.

According to some embodiments, the first terminal may include a first support plate connected to the first current collector, and a first bending plate extending from the first support plate in a first direction and protruding outward from the cap plate. The first bending plate may be bendable in a second direction intersecting the first direction. In some embodiments, the first bending plate may be bendable around a virtual axis parallel to a second direction, the second direction thereby intersecting the first direction.

According to some embodiments, the first support plate and the first bending plate may intersect each other.

According to some embodiments, a ratio of a protrusion length of the first bending plate to a width of the cap plate may be 0.5 or more and 1 or less. According to some embodiments, a ratio of a protrusion length of the first bending plate to a width of the cap plate may be equal to 0.5 or larger than 0.5. According to some embodiments, a ratio of a protrusion length of the first bending plate to a width of the cap plate may be equal to 1 or lower than 1. According to some embodiments, a ratio of a protrusion length of the first bending plate to a width of the cap plate may be a value within the interval between 0.5 and 1.

According to some embodiments, the first terminal may further include a first notch that is concavely formed from the first bending plate in a direction parallel to the second direction.

According to some embodiments, the first notch may be located at each of both sides of the first bending plate.

According to some embodiments, the first current collector may include a first current collecting plate facing the first tab member and in contact with the first tab member, and a first connection member between the first current collecting plate and the first terminal and supporting the first terminal with respect to the first current collecting plate.

According to some embodiments, the first connection member may include a first bending portion that is bendable in the second direction. In some embodiments, the first bending portion may be bendable around a virtual axis parallel to the second direction.

According to some embodiments, the secondary battery may further include a first gasket between the cap plate and the first terminal.

According to some embodiments, the first gasket may include a first gasket body passing through the cap plate, a first inner gasket extending from the first gasket body and surrounding the first support plate, and a first outer gasket extending from the first gasket body and surrounding the first bending plate.

According to some embodiments, a distance from the first bending plate to an outer peripheral surface of the first outer gasket may be 3 mm or more.

According to some embodiments, cross-sectional areas of the first inner gasket and the first outer gasket may be larger than a cross-sectional area of the first gasket body.

According to some embodiments, the first inner gasket may be in contact with a first surface of the cap plate, and the first outer gasket may be in contact with a second surface opposite to the first surface.

According to some embodiments, the first terminal may further include a first coupling hole which passes through the first bending plate and into which the first gasket is inserted.

According to some embodiments, the first terminal may further include a first notch that is concavely formed from the first bending plate in a direction parallel to the second direction, and the first coupling hole may face the first notch in the second direction.

According to some embodiments, the secondary battery may further include a second tab member connected to the second electrode and extending from the electrode assembly, a second current collector between the electrode assembly and the cap plate and connected to the second tab member, and a second terminal extending from the second current collector and provided to be deformable.

According to some embodiments, the first tab member and the second tab member may extend from the electrode assembly in a first direction.

According to some embodiments, the secondary battery may further include an insulating member surrounding the case and the cap plate.

A battery pack according to a second aspect of the present disclosure includes a housing, and a plurality of secondary batteries inside the housing, wherein at least one of the secondary batteries includes a case, an electrode assembly inside the case and having a first electrode and a second electrode, a first tab member connected to the first electrode and extending from the electrode assembly, a cap plate coupled to the case and facing the electrode assembly, a first current collector between the electrode assembly and the cap plate and connected to the first tab member, and a first terminal extending from the first current collector and provided to be deformable.

According to some embodiments, the at least one secondary battery may further include a second terminal connected to the second electrode and spaced apart from the first terminal. In embodiments, the first terminal of one secondary battery may be directly connected to the first terminal or the second terminal of another secondary battery.

### BRIEF DESCRIPTION OF THE DRAWINGS

The drawings attached to this specification illustrate aspects of some embodiments of the present disclosure, and further describe aspects and features of the present disclosure together with the detailed description of the present disclosure. However, the present disclosure should not be construed as being limited to the drawings:
FIG. 1 is a schematic perspective view showing a configuration of a secondary battery according to some embodiments of the present disclosure;
FIG. 2 is a schematic exploded perspective view showing the configuration of the secondary battery according to some embodiments of the present disclosure;
FIG. 3 is a schematic perspective view showing a configuration of an electrode assembly according to some embodiments of the present disclosure;
FIG. 4 is a schematic exploded perspective view showing the configuration of the electrode assembly according to some embodiments of the present disclosure;
FIG. 5 is a schematic perspective view showing a configuration of a first current collector and a first terminal according to some embodiments of the present disclosure;
FIG. 6 is an exploded perspective view of FIG. 5;
FIG. 7 is a front view of FIG. 5;
FIG. 8 is a cross-sectional view of FIG. 5;
FIG. 9 is a schematic view showing a state in which a first bending portion in FIG. 8 is unfolded;
FIG. 10 is a schematic view showing a state in which a first bending plate in FIG. 8 is bent;
FIG. 11 is a schematic plan view showing the arrangement relationship between the first bending plate and a first gasket according to some embodiments of the present disclosure;
FIG. 12 is a schematic perspective view showing a configuration of a second current collector and a second terminal according to some embodiments of the present disclosure;
FIG. 13 is an exploded perspective view of FIG. 12;
FIG. 14 is a front view of FIG. 12;
FIG. 15 is a cross-sectional view of FIG. 12;
FIG. 16 is a schematic plan view showing the arrangement relationship between a second bending plate and a second gasket according to some embodiments of the present disclosure;
FIG. 17 is a schematic perspective view showing a configuration of a battery pack according to some embodiments of the present disclosure; and
FIG. 18 is a schematic enlarged view showing an electrical connection configuration of the battery pack according to some embodiments of the present disclosure.

### DETAILED DESCRIPTION

Herein, aspects of some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

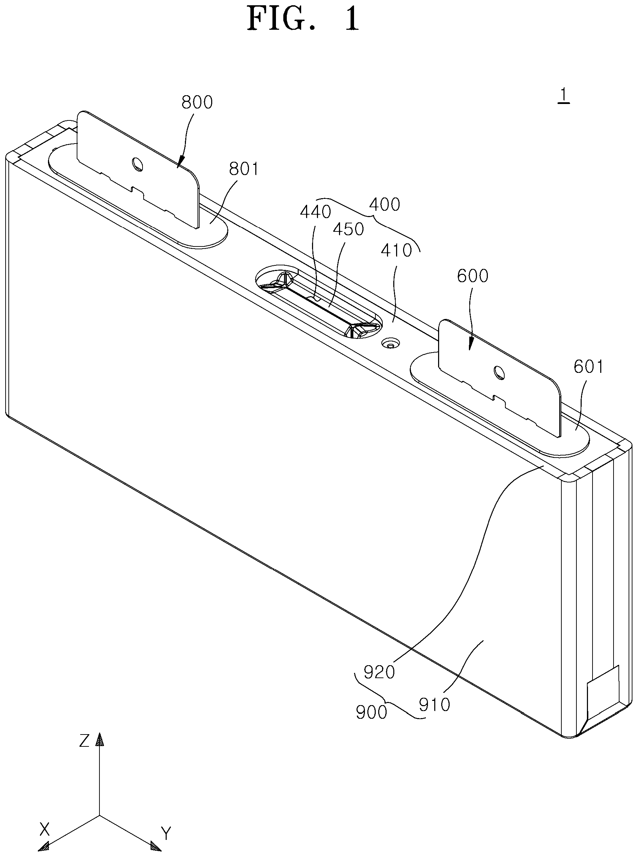

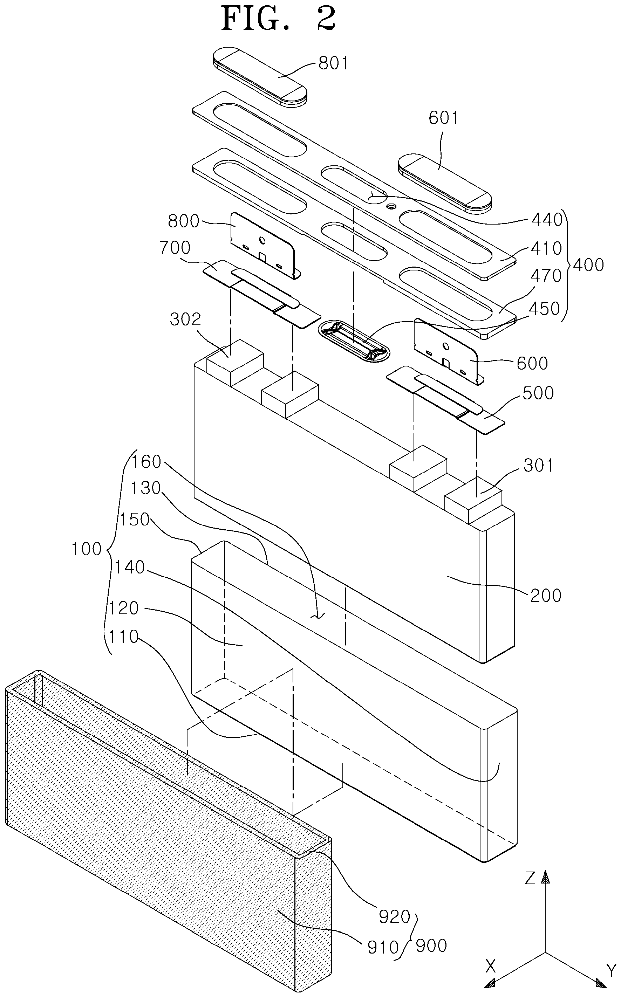

FIG. 1 is a schematic perspective view showing a configuration of a secondary battery according to some embodiments of the present disclosure, and FIG. 2 is a schematic exploded perspective view showing the configuration of the secondary battery according to some embodiments of the present disclosure.

Hereinafter, an example in which the secondary battery is a lithium ion secondary battery and is a prismatic battery will be described. However, embodiments according to the present disclosure are not limited thereto, and the secondary battery may be a lithium polymer battery or cylindrical battery.

Referring to FIGS. 1 and 2, a secondary battery 1 according to some embodiments includes a case 100, an electrode assembly 200, a first tab member 301, a cap assembly 400, a first current collector 500, and a first terminal 600.

The case 100 may form a rough exterior of the secondary battery 1 and accommodate the electrode assembly 200.

The case 100 according to some embodiments may include a bottom portion 110, a front portion 120, a back portion 130, a first side portion 140, and a second side portion 150.

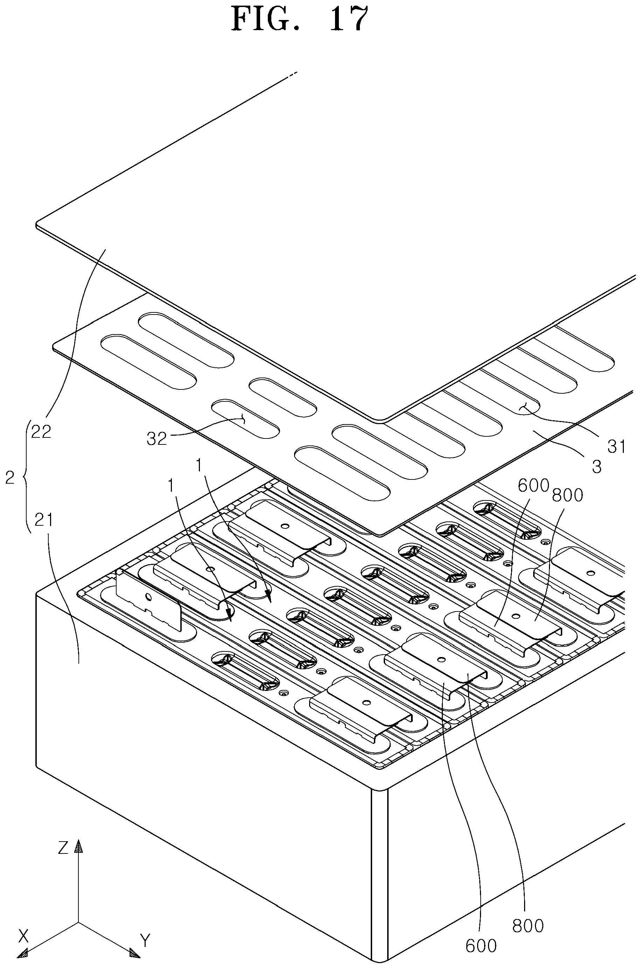

The bottom portion 110 may form an exterior of a lower side (see FIG. 2) of the case 100. The bottom portion 110 according to some embodiments may have a rectangular plate shape. The bottom portion 110 may be seated on a bottom surface of a housing body 21. The housing body 21 may be a member of a housing 2 of a battery pack (see FIG. 17).

The front portion 120, the back portion 130, the first side portion 140, and the second side portion 150 may form an exterior of a peripheral surface of the case 100.

The front portion 120, the back portion 130, the first side portion 140, and the second side portion 150 according to some embodiments may have a plate shape that extends upward (see FIG. 2) from an edge of the bottom portion 110. The front portion 120, the back portion 130, the first side portion 140, and the second side portion 150 may be arranged to form a room on the bottom portion 110. The front portion 120, the back portion 130, the first side portion 140, and the second side portion 150 may be arranged to form a rectangular cross-sectional shape.

The front portion 120 and the back portion 130 according to some embodiments may extend from a long side section of the bottom portion 110. The front portion 120 and the back portion 130 may be arranged in parallel. Areas of the front portion 120 and the back portion 130 may be the same.

The first side portion 140 and the second side portion 150 according to some embodiments may extend from a short side section of the bottom portion 110. The first side portion 140 and the second side portion 150 may be arranged perpendicular to the front portion 120 and the back portion 130. The first side portion 140 and the second side portion 150 may be arranged or extend in parallel to each other. Areas of the first side portion 140 and the second side portion 150 may be the same. The areas of the first side portion 140 and the second side portion 150 may be smaller than the areas of the front portion 120 and the back portion 130.

The case 100 according to some embodiments may further include an opening 160. The opening 160 according to some embodiments may be a space surrounded by upper end portions of the front portion 120, the back portion 130, the first side portion 140, and the second side portion 150. The opening 160 may interconnect an internal space and an external space of the case 100.

Therefore, the case 100 according to some embodiments may have a rectangular parallelepiped shape with an open upper side.

A first direction to be described below may be a direction that is parallel to a Z-axis from the bottom portion 110 toward the opening 160 in FIGS. 1 and 2. A second direction may be a direction that is parallel to a Y-axis from the first side portion 140 toward the second side portion 150 in FIGS. 1 and 2. A third direction may be a direction that is parallel to an X-axis from the front portion 120 toward the back portion 130 in FIGS. 1 and 2.

The electrode assembly 200 may function as a unit structure that performs charging and discharging operations of power in the secondary battery 1. The electrode assembly 200 may be accommodated inside the case 100.

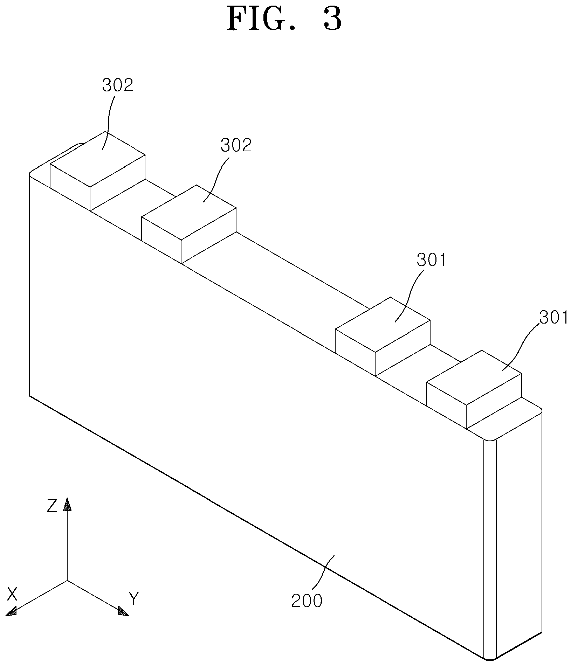

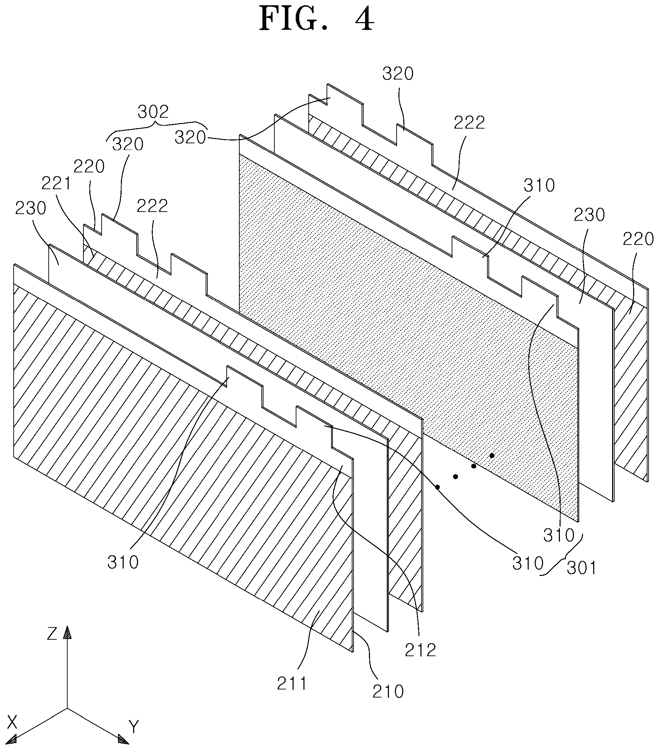

FIG. 3 is a schematic perspective view showing a configuration of an electrode assembly according to some embodiments of the present disclosure, and FIG. 4 is a schematic exploded perspective view showing the configuration of the electrode assembly according to some embodiments of the present disclosure.

Referring to FIGS. 1 to 4, the electrode assembly 200 according to some embodiments may include a first electrode 210, a second electrode 220, and a separator 230 located between the first electrode 210 and the second electrode 220. The first electrode 210, the separator 230, and the second electrode 220 may be provided in plural.

Hereinafter, an example in which the electrode assembly 200 has a stacked form in which the plurality of first electrodes 210, separators 230, and second electrodes 220 are sequentially stacked in the third direction will be described in more detail. However, the electrode assembly 200 is not limited thereto, and may be formed to have a form in which the first electrodes 210, the separators 230, and the second electrodes 220 are wound around a winding axis clockwise or counterclockwise in a stacked state or arrangement.

The first electrode 210 may function as one of a positive electrode and a negative electrode of the electrode assembly 200. Hereinafter, an example in which the first electrode 210 is the positive electrode of the electrode assembly 200 will be described in more detail. However, the first electrode 210 is not limited thereto and may function as the negative electrode of the electrode assembly 200.

The first electrode 210 according to some embodiments may be formed to have a foil shape including a metallic material such as aluminum or an aluminum alloy. The type, size, shape, etc., of the first electrode 210 are not particularly limited as long as the first electrode 210 is conductive without causing a chemical change in the secondary battery. A cross-sectional shape of the first electrode 210 may be changed in design to have any of various shapes other than the rectangular shape.

A plurality of first electrodes 210 may be provided. The plurality of first electrodes 210 may be arranged in the third direction between the front portion 120 and the back portion 130 of the case 100. The number of first electrodes 210 may be variously changed in design depending on the charging capacity, etc., of the secondary battery 1.

A first active material layer 211 may be applied on at least a portion of the first electrode 210. The first active material layer 211 may be applied on both surfaces of the first electrode 210 or alternatively, applied on only one surface of the first electrode 210.

According to some embodiments, as the first electrode 210 functions as a positive electrode, the first active material layer 211 may include a positive electrode active material.

The positive electrode active material may be a compound capable of reversible intercalation and deintercalation of lithium ions (lithiated intercalation compound). For example, as the positive electrode active material, one or more of composite oxides of lithium and a metal selected from the group consisting of cobalt, manganese, nickel, iron, and a combination thereof may be used.

As an example, the positive electrode active material may include at least one of lithium-iron-phosphorus oxide (LiFePO4, LFP), lithium-manganese-iron-phosphorus oxide (LiMnFePO4, LMFP), or lithium-nickel-cobalt-manganese oxide (LiNixCoyMnzO2, NCM). Here, 0<x<1, 0<y<1, 0<z<1, and x+y+z=1 may be satisfied. The positive electrode active material may include only one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM) and include two or all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

The first active material layer 211 may further include a positive electrode conductive material.

The positive electrode conductive material is used to give conductivity to the first active material layer 211, and any material that is an electrically conductive material without causing a chemical change may be used. Examples of the positive electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, and a mixture thereof.

The first active material layer 211 may further include a positive electrode binder.

The positive electrode binder serves to well bond particles constituting the positive electrode active material and also serves to well bond the positive electrode active material to the first electrode 210.

Examples of the positive electrode binder include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

When the aqueous binder is used as the positive electrode binder, the aqueous binder may further include a cellulose based compound capable of giving viscosity. As the cellulose based compound, one or more of carboxymethyl cellulose, hydroxypropylmethyl cellulose, methyl cellulose, and an alkali metal salt thereof may be used by being mixed. The alkali metal may be Na, K, or Li.

The dry binder may be a polymer material capable of fiberization, for example, polytetrafluoroethylene, polyvinylidene fluoride, polyvinylidene fluoride-hexafluoropropylene copolymer, polyethylene oxide, or a combination thereof.

The first electrode 210 may include a first uncoated portion 212 on which the first active material layer 211 is not applied. The first uncoated portion 212 according to some embodiments may be located in an upper end portion region of the first electrode 210 arranged to face the opening 160 inside the case 100. However, the first uncoated portion 212 is not limited thereto and may be formed over the entire edge region of the first electrode 210.

The second electrode 220 may function as one of a positive electrode and negative electrode of the electrode assembly 200. Hereinafter, an example in which the second electrode 220 is the negative electrode of the electrode assembly 200 will be described. However, the second electrode 220 is not limited thereto and may function as the positive electrode of the electrode assembly 200.

A plurality of second electrodes 220 may be provided. The plurality of second electrodes 220 may be arranged in the third direction between the front portion 120 and the back portion 130 of the case 100. The first electrode 210 and the second electrode 220 may be alternately arranged in the third direction. The second electrode 220 may be spaced a distance (e.g., a set or predetermined distance) from the first electrode 210 in the third direction.

The second electrode 220 according to some embodiments may be formed to have a foil shape including a metallic material such as copper, a copper alloy, nickel, or a nickel alloy. The type, size, shape, etc., of the second electrode 220 are not particularly limited as long as the second electrode 220 is conductive without causing a chemical change in the secondary battery. A cross-sectional shape of the second electrode 220 may be changed in design to have any of various shapes other than the rectangular shape.

A second active material layer 221 may be applied on at least a portion of the second electrode 220. The second active material layer 221 may be applied on both surfaces of the second electrode 220 or alternatively, applied on only one surface of the second electrode 220.

As the second electrode 220 functions as a negative electrode, the second active material layer 221 may include a negative electrode active material.

The negative electrode active material may include a material capable of reversible intercalation/deintercalation of lithium ions, a lithium metal, a lithium metal alloy, a material with which lithium is doped or undoped, or a transition metal oxide.

The material capable of reversible intercalation/deintercalation of lithium ions may include a carbon-based negative electrode active material, for example, crystalline carbon, amorphous carbon, or a combination thereof. Examples of crystalline carbon may include graphite such as amorphous, plate-like, flake-like, spherical, or fiber-like natural graphite or artificial graphite, and examples of amorphous carbon may include soft carbon, hard carbon, mesophase pitch carbide, calcined coke, etc.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material with which lithium is doped or undoped, a Si-based negative electrode active material or a Sn-based negative electrode active material may be used. The Si-based negative electrode active material may be silicon, a silicon-carbon composite, SiOₓ (0<x<2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to some embodiments, the silicon-carbon composite may be in the form of silicon particles and amorphous carbon coated on surfaces of the silicon particles. For example, the silicon-carbon composite may include a secondary particle (core) formed by primary silicon particles and an amorphous carbon coating layer (shell) located on a surface of the secondary particle. The amorphous carbon may be located between the primary silicon particles, for example, so that the primary silicon particles may be coated with amorphous carbon. The secondary particles may be present by being dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with a carbon-based negative electrode active material.

The second active material layer 221 may further include a negative electrode conductive material and a negative electrode binder.

The negative electrode conductive material is used to give conductivity to the second active material layer 221, and any material that is an electrically conductive material without causing a chemical change may be used. Examples of the negative electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, and a mixture thereof.

The negative electrode binder serves to well bond particles constituting the negative electrode active material and also serves to well bond the negative electrode active material to the second electrode 220.

Examples of the negative electrode binder include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

When the aqueous binder is used as the negative electrode binder, the aqueous binder may further include a cellulose based compound capable of giving viscosity. As the cellulose based compound, one or more of carboxymethyl cellulose, hydroxypropylmethyl cellulose, methyl cellulose, and an alkali metal salt thereof may be used by being mixed. The alkali metal may be Na, K, or Li.

The dry binder may be a polymer material capable of fiberization, for example, polytetrafluoroethylene, polyvinylidene fluoride, polyvinylidene fluoride-hexafluoropropylene copolymer, polyethylene oxide, or a combination thereof.

The second electrode 220 may include a second uncoated portion 222 on which the second active material layer 221 is not applied. The second uncoated portion 222 according to some embodiments may be located in an upper end portion region of the second electrode 220 arranged to face the opening 160 inside the case 100. However, the second uncoated portion 222 is not limited thereto and may be formed over the entire edge region of the second electrode 220.

The separator 230 may be located between the first electrode 210 and the second electrode 220. The separator 230 may function to prevent or reduce instances of a short between the first electrode 210 and the second electrode 220 while allowing the movement of lithium ions between the first electrode 210 and the second electrode 220.

The separator 230 may be arranged to entirely cover a surface region of the electrode assembly 200. Therefore, the separator 230 may prevent or reduce instances of the first electrode 210 and the second electrode 220 being directly exposed to the outside of the electrode assembly 200.

As the separator 230, a multilayered membrane of two or more layers of polyethylene, polypropylene, polyvinylidene fluoride or these may be used, and a mixed multilayered membrane such as a two-layer separator of polyethylene/polypropylene, a three-layer separator of polyethylene/polypropylene/polyethylene, or a three-layer separator of polypropylene/polyethylene/polypropylene may be used.

The separator 230 may include a porous substrate and a coating layer including an organic material, an inorganic material, or a combination thereof, which is located on one surface or both surfaces of the porous substrate.

The porous substrate may be a polymer film made of one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, Teflon, and polytetrafluoroethylene, or a copolymer or mixture of two or more of the above materials.

The organic material may include a polyvinylidene fluoride-based polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic and inorganic materials may be present in one coating layer by being mixed or present in a form in which a coating layer including an organic material and a coating layer including an inorganic material are stacked.

The first tab member 301 may be connected to the first electrode 210 and may protrude outward from the electrode assembly 200. As the first electrode 210 is illustrated as a positive electrode, the first tab member 301 may function as a positive electrode tab of the secondary battery 1. However, the first tab member 301 is not limited thereto, and when the first electrode 210 is a negative electrode, may function as a negative electrode tab of the secondary battery 1.

The first tab member 301 according to some embodiments may extend from the electrode assembly 200 in the first direction. That is, the first tab member 301 may extend toward the opening 160 inside the case 100.

A plurality of first tab members 301 may be provided. The plurality of first tab members 301 may be arranged in the second direction. As an example, a pair of first tab members 301 according to some embodiments may be formed, and the pair of first tab members 301 may be arranged to be spaced a distance (e.g., a set or predetermined distance) from each other in the second direction.

The first tab member 301 according to some embodiments may include a plurality of first tabs 310.

The first tab 310 according to some embodiments may have a foil shape extending from the first uncoated portion 212 of the first electrode 210 in the first direction. The first tab 310 may have a rectangular shape (or a substantially rectangular shape). However, the shape of the first tab 310 is not limited thereto and may be changed in design to have any of various shapes.

The first tab 310 may be formed integrally with the first electrode 210. For example, the first tab 310 may be the remaining region of the first uncoated portion 212 that remains after a partial region of the first uncoated portion 212 is cut or removed by notching processing, etc. Alternatively, the first tab 310 may be manufactured separately from the first electrode 210 and then connected to the first uncoated portion 212 by welding, etc. A material of the first tab 310 may be the same as the material of the first electrode 210.

The number of first tabs 310 may be the same as the number of first electrodes 210. Each first tab 310 may individually extend from the first uncoated portion 212 of one of different first electrodes 210. The neighboring first tabs 310 may be arranged to face each other in the third direction. That is, the plurality of first tabs 310 may be arranged in the third direction. The neighboring first tabs 310 may be arranged in parallel. Therefore, the first tab member 301 according to some embodiments may be an assembly of the plurality of first tabs 310 arranged in the second direction. The neighboring first tabs 310 may be in contact with each other or spaced the thickness of the separator 230 from each other.

The secondary battery 1 according to some embodiments may further include a second tab member 302.

The second tab member 302 may be connected to the second electrode 220 and may protrude outward from the electrode assembly 200. As the second electrode 220 is illustrated as a negative electrode, the second tab member 302 may function as a negative electrode tab of the secondary battery 1. However, the second tab member 302 is not limited thereto, and when the second electrode 220 is a positive electrode, may function as a positive electrode tab of the secondary battery 1.

The second tab member 302 according to some embodiments may extend from the electrode assembly 200 in the first direction. That is, the second tab member 302 may extend toward the opening 160 inside the case 100. Hereinafter, although an example in which the second tab member 302 extends from the electrode assembly 200 in the first direction, the second tab member 302 is not limited thereto and may extend in a direction that differs from the first direction.

The first tab member 301 and the second tab member 302 may be arranged to be spaced apart from each other in the second direction. As an example, the second tab member 302 may be located at a position that is spaced a distance (e.g., a set or predetermined distance) from the first tab member 301 in the second direction.

A plurality of second tab members 302 may be provided. The plurality of second tab members 302 may be arranged in the second direction. As an example, a pair of second tab members 302 according to some embodiments may be formed, and the pair of second tab members 302 may be arranged to be spaced a distance (e.g., a set or predetermined distance) from each other in the second direction.

The second tab member 302 may include a plurality of second tabs 320.

The second tab 320 according to some embodiments may have a foil shape extending from the second uncoated portion 222 of the second electrode 220 in the first direction. The second tab 320 may have a rectangular shape (or a substantially rectangular shape). However, the shape of the second tab 320 is not limited thereto and may be changed in design to have any of various shapes.

The second tab 320 may be formed integrally with the second electrode 220. For example, the second tab 320 may be the remaining region of the second uncoated portion 222 that remains after a partial region of the second uncoated portion 222 is cut or removed by notching processing, etc. Alternatively, the second tab 320 may be manufactured separately from the second electrode 220 and then connected to the second uncoated portion 222 by welding, etc. A material of the second tab 320 may be the same as the material of the second electrode 220.

The number of second tabs 320 may be the same as the number of second electrodes 220. Each second tab 320 may individually extend from the second uncoated portion 222 of one of different second electrodes 220. The neighboring second tabs 320 may be arranged to face each other in the second direction. That is, the plurality of second tabs 320 may be arranged in the third direction. The neighboring second tabs 320 may be arranged in parallel. Therefore, the second tab member 302 according to some embodiments may be an assembly of the plurality of second tabs 320 arranged in the third direction. The neighboring second tabs 320 may be in contact with each other or spaced the thickness of the separator 230 from each other.

The cap assembly 400 may be coupled to the case 100 to seal the case 100.

The cap assembly 400 according to some embodiments may include a cap plate 410.

The cap plate 410 may form a rough exterior of the cap assembly 400.

The cap plate 410 according to some embodiments may be formed to have a flat plate shape. The cap plate 410 may be located in the opening 160 of the case 100. The cap plate 410 may be arranged to face the electrode assembly 200 in the first direction. That is, the cap plate 410 may be located at a position that is spaced a distance (e.g., a set or predetermined distance) from the electrode assembly 200 in the first direction. The cap plate 410 may be arranged parallel to the bottom portion 110 of the case 100.

The cap plate 410 may be seated on an upper end portion of the case 100, for example, upper end portions of the front portion 120, the back portion 130, the first side portion 140, and the second side portion 150. The cap plate 410 may be connected to the case 100 by any of various types of coupling methods such as welding, bolting, and fitting methods.

The cap plate 410 may include a first surface 411 facing the electrode assembly 200 in the first direction and a second surface 412 opposite to the first surface 411. The second surface of the cap plate 410 may be arranged to face an outer space of the secondary battery 1.

The cap assembly 400 according to some embodiments may further include a vent hole 440 and a vent 450.

The vent hole 440 according to some embodiments may be formed to have a hole shape that vertically passes through both surfaces of the cap plate 410 in the first direction. The vent hole 440 may function as a configuration that provides a path through which flames, gas, smoke, etc. formed inside the case 100 are discharged to the outside of the case 100 when thermal runaway due to an overcurrent or the like occurs in the secondary battery 1. The vent hole 440 may be located in a central portion of the cap plate 410. A cross-sectional shape of the vent hole 440 may be changed in design to have any of various shapes such as an oval, circle, and polygon.

The vent 450 may be installed in the vent hole 440 and opened and closed in conjunction with a change in internal pressure of the case 100. That is, the vent 450 may close the vent hole 440 when the secondary battery 1 operates normally to block an electrolyte inside the case 100 from leaking to the outside of the case 100 or moisture, foreign substances, etc., from flowing into the case 100. The vent 450 may open the vent hole 440, when thermal runaway occurs in the secondary battery 1, to guide flames, gas, smoke, etc. formed inside the case 100 to be discharged to the outside of the case 100.

The vent 450 according to some embodiments may be formed to have plate shape (or a substantially plate shape). The vent 450 may be fixed to the cap plate 410 by any of various types of coupling methods such as welding, bolting, and fitting methods. The vent 450 may be located inside the vent hole 440 or arranged to face the vent hole 440 in the first direction above or under the cap plate 410.

The thickness of the vent 450 in the first direction may be smaller than the thickness of the cap plate 410. Therefore, the vent 450 may be easily ruptured or broken when the internal pressure of the case 100 increases. The vent 450 may include a notch that is formed to be concave inward from the vent 450 to be preferentially ruptured when the internal pressure of the case 100 increases.

The cap assembly 400 according to some embodiments may further include an electrolyte injection port which is formed to pass through the cap plate 410 and at which a sealing plug may be installed. The electrolyte injection port may be arranged to be spaced a distance (e.g., a set or predetermined distance) from the vent hole 440 in the second direction or in a direction opposite to the second direction.

The cap assembly 400 according to some embodiments may further include an insulating plate 470.

The insulating plate 470 may be located between the cap plate 410 and the electrode assembly 200. The insulating plate 470 may prevent or reduce direct contact between the cap plate 410 and the electrode assembly 200 to insulate the cap plate 410 and the electrode assembly 200. The insulating plate 470 may fix the electrode assembly 200 inside the case 100. The insulating plate 470 can prevent or reduce damage to the electrode assembly 200 when the cap plate 410 is deformed to the inside of the case 100 due to an external impact, etc.

The insulating plate 470 according to some embodiments may be arranged to face the electrode assembly 200 in the first direction inside the case 100. That is, the electrode assembly 200, the insulating plate 470, and the cap plate 410 may be arranged sequentially in the first direction. The insulating plate 470 may be fixed to an inner surface of the case 100 by any of various types of coupling methods such as fitting, welding, bolting, and adhesion methods. The insulating plate 470 may be in contact with one surface of the electrode assembly 200 from which the first tab member 301 and the second tab member 302 extend. The insulating plate 470 may be made of an insulating material such as polyethylene (PE), polypropylene (PP), polyethylene terephthalate (PET), or rubber.

The first current collector 500 may be located between the electrode assembly 200 and the cap plate 410 and connected to the first tab member 301. The first current collector 500 may function as a component that electrically connects the first tab member 301 to the first terminal 600. The first current collector 500 may be made of an electrically conductive material such as aluminum, copper, or nickel.

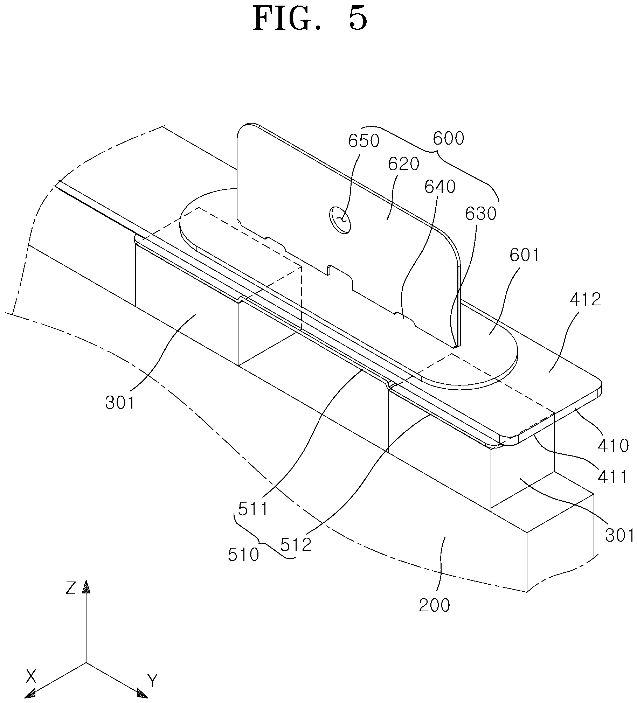

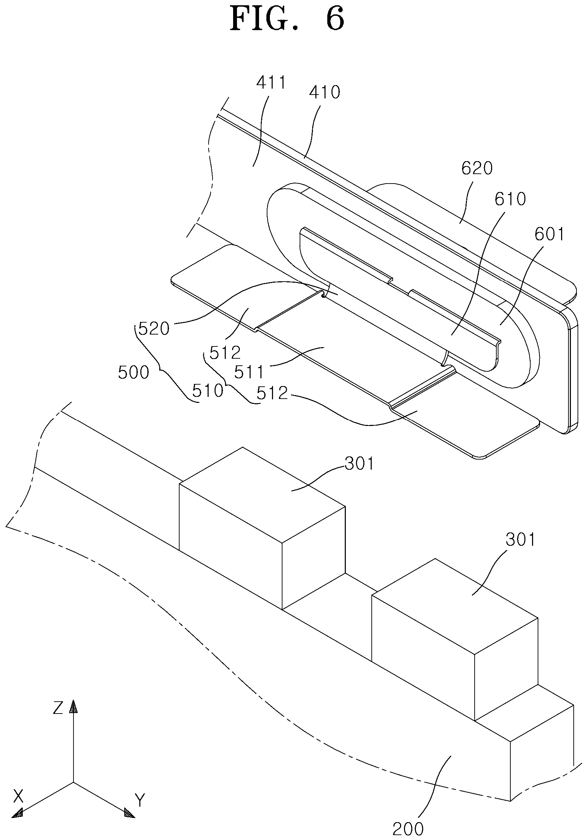

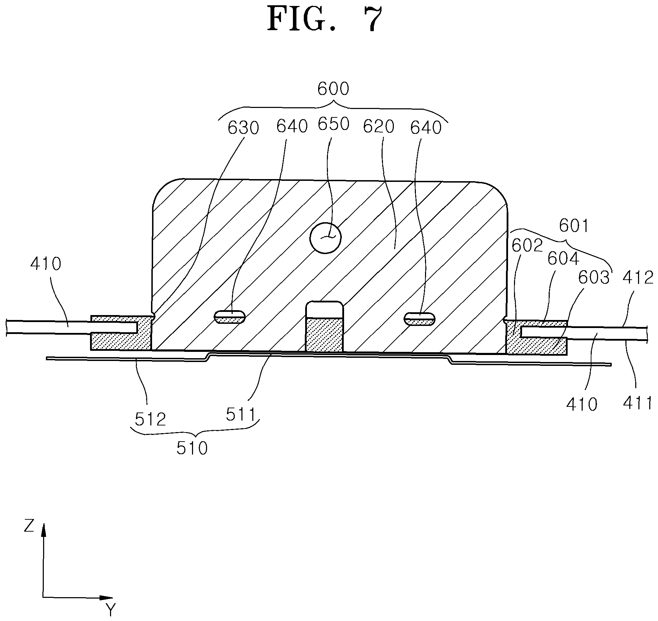

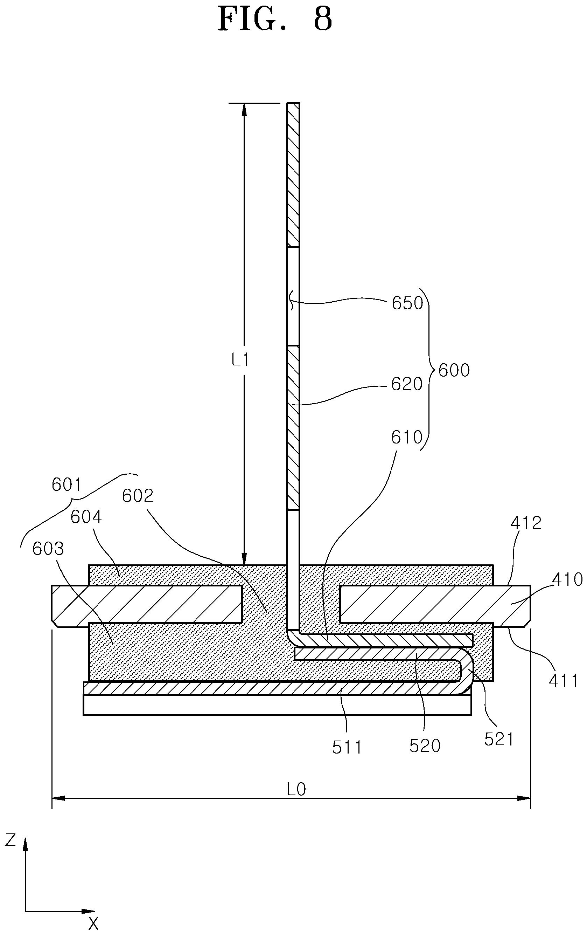

FIG. 5 is a schematic perspective view showing a configuration of a first current collector and a first terminal according to some embodiments of the present disclosure, FIG. 6 is an exploded perspective view of FIG. 5, FIG. 7 is a front view of FIG. 5, and FIG. 8 is a cross-sectional view of FIG. 5.

Referring to FIGS. 1 to 8, the first current collector 500 according to some embodiments may include a first current collecting plate 510 and a first connection member 520.

The first current collecting plate 510 may be arranged to face the first tab member 301 and may be in contact with the first tab member 301.

The first current collecting plate 510 according to some embodiments may include a first center plate 511 and a first extension plate 512.

The first center plate 511 may form a central exterior of the first current collecting plate 510 and support the first extension plate 512.

The first center plate 511 according to some embodiments may be located between the electrode assembly 200 and the cap plate 410. The first center plate 511 may be arranged to face the electrode assembly 200 in the first direction. As an example, the first center plate 511 may be arranged to face one surface of the electrode assembly 200 located between the pair of neighboring first tab members 301.

Both end portions of the first center plate 511 may extend toward the electrode assembly 200. The both end portions of the first center plate 511 may pass through the insulating plate 470 and may be located at a lower side of the insulating plate 470.

The first extension plate 512 may extend from the first center plate 511 and may be in contact with the first tab member 301.

The first extension plate 512 according to some embodiments may extend from the end portion of the first center plate 511 in a direction parallel to the second direction. The first extension plate 512 may be arranged to face the first tab member 301 in the first direction. The first extension plate 512 may be in contact with an end surface of the first tab member 301 arranged to face the cap plate 410.

A pair of first extension plates 512 may be provided. The pair of first extension plates 512 may extend from both end portions of the first center plate 511 in the second direction and in a direction opposite to the second direction, respectively. Each first extension plate 512 may be individually in contact with an end surface of one of different first tab members 301.

The first tab member 301 and the first extension plate 512 may be bonded by laser welding.

The first connection member 520 may be located between the first current collecting plate 510 and the first terminal 600. The first connection member 520 may support the first terminal 600 with respect to the first current collecting plate 510. That is, the first connection member 520 may function as a component that provides mechanical and electrical connection between the first current collecting plate 510 and the first terminal 600.

The first connecting member 520 according to some embodiments may have both end portions connected to the first center plate 511 and the first support plate 610 of the first terminal 600, respectively.

A first bending portion 521 that movably supports the first terminal 600 with respect to the first current collecting plate 510 may be formed on a central portion of the first connection member 520.

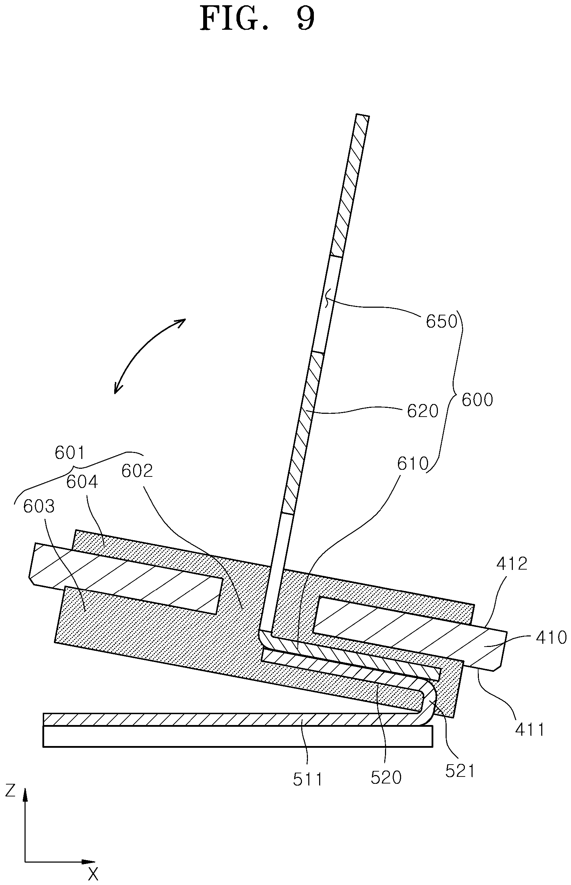

FIG. 9 is a schematic view showing a state in which a first bending portion in FIG. 8 is unfolded.

Referring to FIGS. 8 and 9, the first bending portion 521 according to some embodiments may be bent clockwise or counterclockwise around the second direction and may adjust the relative position of the first terminal 600 with respect to the first current collecting plate 510. As an example, as the first bending portion 521 is bent counterclockwise in FIG. 8, the first current collecting plate 510 and the first terminal 600 may be aligned in the first direction. Therefore, in the secondary battery 1 according to some embodiments, the relative position of the first terminal 600 may be arranged with respect to the first current collecting plate 510 using only a bending operation of the first bending portion 521 without an additional bonding process of the first current collecting plate 510 and the first terminal 600. In FIG. 9, as the first bending portion 521 is unfolded clockwise, the first terminal 600 may move outward from the first current collecting plate 510, and an upper surface of the first current collecting plate 510 may be opened. Therefore, the first bending portion 521 can prevent or reduce instances of a welding device, etc., interfering with the first terminal 600 when the first current collecting plate 510 and the first tab member 301 are bonded.

The first terminal 600 may extend from the first current collector 500 to the outside of the cap plate 410. The first terminal 600 may function as a component that connects the secondary battery 1 to an external electrical device, for example, another secondary battery 1, a busbar, etc.

The first terminal 600 may be provided to be deformable. Therefore, the first terminal 600 may have an adjustable position or extending direction by deforming its own shape and may be directly connected to a terminal of another secondary battery 1 or an external busbar. The first terminal 600 may be made of an electrically conductive material such as copper, aluminum, or nickel. The material of the first terminal 600 may be the same as the material of the first current collector 500 or alternatively, may differ from the material of the first current collector 500.

The first terminal 600 according to some embodiments may include a first support plate 610 and a first bending plate 620.

The first support plate 610 may form a one side exterior of the first terminal 600 and support the first bending plate 620. The first support plate 610 may be connected to the first current collector 500.

The first support plate 610 according to some embodiments may be formed to have a flat plate shape (or a substantially flat plate shape). The first support plate 610 may be connected to the other end portion of the first connecting member 520 extending from the first center plate 511. The first support plate 610 may be manufactured separately from the first connecting member 520 and then connected to the first connecting member 520 by welding, etc. Alternatively, the first support plate 610 may be formed integrally with the first connecting member 520. The relative position of the first support plate with respect to the first center plate 511 may be changed in conjunction with the bending operation of the first bending portion 521. The first support plate 610 may be arranged to be parallel to and face the first center plate 511 in the first direction as the first bending portion 521 is completely bent counterclockwise (see FIG. 8).

The first bending plate 620 may extend from the first support plate 610 and protrude outward from the cap plate 410.

The first bending plate 620 according to some embodiments may be arranged to intersect the first support plate 610. As an example, the first bending plate 620 may have a flat plate shape that extends from the first support plate 610 in the first direction in a state in which the first support plate 610 is arranged to be parallel to and face the first center plate 511 in the first direction. An end portion of the first bending plate 620 may vertically pass through the first surface 411 and the second surface 412 of the cap plate 410 in the first direction and protrude to an external space of the cap plate 410.

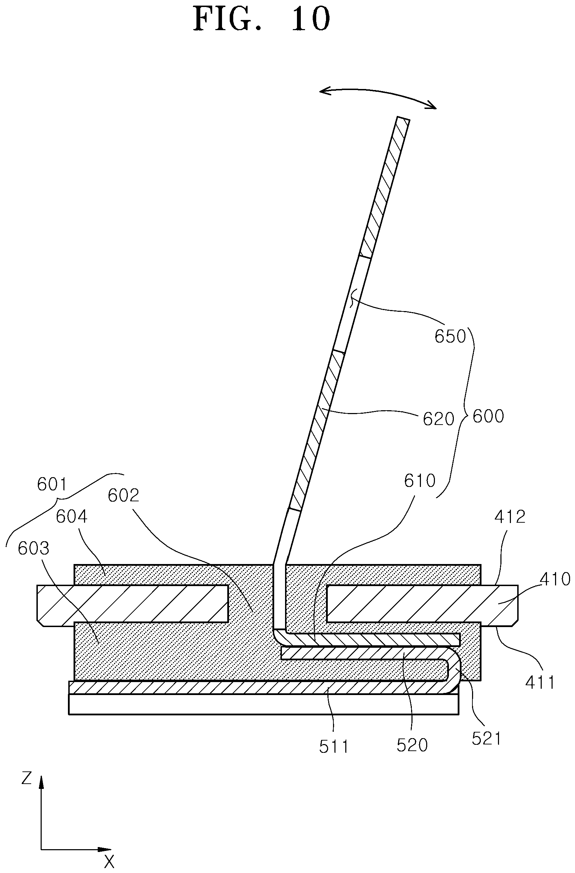

FIG. 10 is a schematic view showing a state in which a first bending plate in FIG. 8 is bent.

Referring to FIGS. 1 to 10, the first bending plate 620 may be provided to be bent around the second direction. The first bending plate 620 may be bent clockwise or counterclockwise with respect to an arbitrary straight line parallel to the second direction by an external force applied from a user, a tool, etc. During a bending operation of the first bending plate 620, the end portion of the first bending plate 620 may protrude outward from the cap plate 410 in the third direction or a direction opposite to the third direction. Therefore, the first bending plate 620 may be in contact with and connected to an electrical device located outside the cap plate 410, for example, a terminal of another secondary battery 1 or a busbar.

The first terminal 600 according to some embodiments may further include a first notch 630.

The first notch 630 may function as a component that guides the bending operation of the first bending plate 620.

The first notch 630 according to some embodiments may have a groove shape that is concavely formed in a direction parallel to the second direction from an end surface of the first bending plate 620 perpendicular to the second direction. The first notch 630 may pass through both surfaces of the first bending plate 620 in the third direction. A length of the first bending plate 620 in the second direction may be relatively reduced in a region in which the first notch 630 is formed. Therefore, bending stress applied to the first bending plate 620 is concentrated on the first notch 630, and the bending operation of the first bending plate 620 may be consistently performed based on the first notch 630. A cross-sectional shape of the first notch 630 may be changed in design to have any of various shapes such as a polygon and oval other than the semicircular shape shown in FIG. 7.

A pair of first notches 630 may be provided. The pair of first notches 630 may be arranged symmetrically at both sides of the first bending plate 620. As an example, the pair of first notches 630 may be formed concavely in the direction opposite to the second direction from one end portion of the first bending plate 620 arranged to face the second direction, and the remaining first notch 630 may be formed concavely in the second direction from the other end portion of the first bending plate 620 arranged to face the direction opposite to the second direction. The pair of first notches 630 may be arranged to face each other in the second direction. That is, all center lines of the pair of first notches 630 may be arranged to be located on one straight line parallel to the second direction.

The secondary battery 1 according to some embodiments may further include a first gasket 601.

The first gasket 601 may electrically insulate the cap plate 410 and the first terminal 600. The first gasket 601 may block moisture or foreign substances from being introduced between the cap plate 410 and the first terminal 600. The first gasket 601 may be made of an insulating material such as polyethylene (PE), polypropylene (PP), polyethylene terephthalate (PET), or rubber. The first gasket 601 may be installed between the cap plate 410 and the first terminal 600 by insert injection molding.

The first gasket 601 according to some embodiments may include a first gasket body 602, a first inner gasket 603, and a first outer gasket 604.

The first gasket body 602 may form a central exterior of the first gasket 601.

The first gasket body 602 according to some embodiments may vertically pass through the first surface 411 and the second surface 412 of the cap plate 410. One end portion of the first gasket body 602 may protrude a distance (e.g., a set or predetermined distance) from the first surface 411 to the internal space of the case 100. The other end portion of the first gasket body 602 may protrude a distance (e.g., a set or predetermined distance) from the second surface 412 to the outside of the cap plate 410. The first gasket body 602 may be arranged to pass through the cap plate 410 and surround a lower end portion region of the first bending plate 620 located inside the cap plate 410.

The first inner gasket 603 may be arranged to extend from the first gasket body 602 and surround the first support plate 610.

The first inner gasket 603 according to some embodiments may be connected to the one end portion of the first gasket body 602 protruding to the inner space of the case 100. The first inner gasket 603 may be arranged to entirely surround the first support plate 610 facing the first surface 411 of the cap plate 410. A cross-sectional area of the first inner gasket 603 perpendicular to the first direction may be larger than a cross-sectional area of the first gasket body 602 perpendicular to the first direction. The first inner gasket 603 may be in contact with the first surface 411 of the cap plate 410. Therefore, the first inner gasket 603 may be in contact with the first surface 411 to prevent or reduce instances of the first gasket 601 being separated from the cap plate 410 in the first direction.

The first outer gasket 604 may be arranged to extend from the first gasket body 602 and surround the first bending plate 620.

The first outer gasket 604 according to some embodiments may be connected to the other end portion of the first gasket body 602 protruding outward from the cap plate 410. The first outer gasket 604 may be arranged to surround the first bending plate 620 protruding from the second surface 412 of the cap plate 410. A height of the first outer gasket 604 may be equal to or lower than a height of the center line of the first notch 630. Therefore, the first outer gasket 604 may not interfere with the bending operation of the first bending plate 620 by exposing all or part of the first notch 630 to the outside.

A cross-sectional area of the first outer gasket 604 perpendicular to the first direction may be larger than the cross-sectional area of the first gasket body 602 perpendicular to the first direction. The first outer gasket 604 may be in contact with the second surface 412 of the cap plate 410. Therefore, the first outer gasket 604 may be in contact with the second surface 412 to prevent or reduce instances of the first gasket 601 being separated from the cap plate 410 in the direction opposite to the first direction.

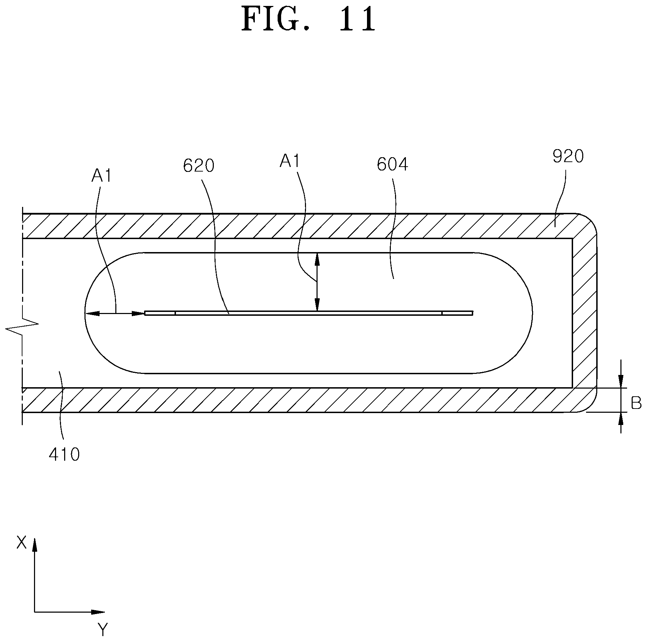

FIG. 11 is a schematic plan view showing the arrangement relationship between the first bending plate and a first gasket according to some embodiments of the present disclosure.

Referring to FIG. 11, a distance A1 from the first bending plate 620 to an outer peripheral surface of the first outer gasket 604 may be 3 mm or more. When the distance A1 from the first bending plate 620 to the outer peripheral surface of the first outer gasket 604 is smaller than 3 mm, electrical insulation between the cap plate 410 and the first terminal 600 cannot be sufficiently secured. Various designs are possible within a range in which the distance A1 from the first bending plate 620 to the outer peripheral surface of the first outer gasket 604 is 3 mm or more and is smaller than a distance from the first bending plate 620 to an edge of the cap plate 410.

A ratio (L1/L0) of a protrusion length L1 of the first bending plate 620 to the width L0 of the cap plate 410 may be larger than or equal to 0.5 and/or smaller than or equal to 1 (i. e., it may be L1/L0 ≥ 0.5 and/or L1/L0 ≤ 1). Here, when the first bending plate 620 is arranged parallel to the first direction, the protrusion length L1 of the first bending plate 620 may be a length from an upper surface of the first outer gasket 604 or the center line of the first notch 630 to the end portion of the first bending plate 620. When the ratio (L1/L0) of the protrusion length L1 of the first bending plate 620 to the width L0 of the cap plate 410 is smaller than 0.5, the length of the first bending plate 620 is excessively small, and thus smooth connection with an adjacent electrical device cannot be achieved. When the ratio (L1/L0) of the protrusion length L1 of the first bending plate 620 to the width L0 of the cap plate 410 is greater than 0.5, the length of the first bending plate 620 is excessively long, and thus there is a concern that the first bending plate 620 may interfere with an adjacent component.

The first terminal 600 according to some embodiments may further include a first coupling hole 640.

The first coupling hole 640 may function as a component for reinforcing coupling strength between the first bending plate 620 and the first gasket 601.

The first coupling hole 640 according to some embodiments may have a hole shape that passes through both surfaces of the first bending plate 620 in the third direction. The first gasket 601, for example, the first outer gasket 604 surrounding the first bending plate 620, may be inserted into the first coupling hole 640. Therefore, the first terminal 600 is coupled by being caught on the first gasket 601 in a direction intersecting the first direction, and relative movement of the first terminal 600 with respect to the first gasket 601 can be prevented or reduced.

The first coupling hole 640 may be arranged to face the first notch 630 in the second direction. As an example, the first coupling hole 640 may be arranged between the pair of first notches 630. Therefore, the first coupling hole 640 may reinforce the coupling strength between the first bending plate 620 and the first gasket 601 and at the same time, guide the bending operation of the first bending plate 620 together with the first notch 630.

A plurality of first coupling holes 640 may be provided. The plurality of first coupling holes 640 may be arranged at set intervals in the second direction.

The first terminal 600 according to some embodiments may further include a first alignment hole 650.

The first alignment hole 650 may function to indicate a position at which a tool for fixing the first terminal 600 is fastened during the insert injection molding of the first gasket 601 or a connection process between the first terminal 600 and an external electrical device.

The first alignment hole 650 according to some embodiments may have a hole shape that passes through both surfaces of the first bending plate 620 in the third direction. A height of the first alignment hole 650 may be greater than the heights of the first notch 630 and the first coupling hole 640. That is, the first alignment hole 650 may be arranged at a position that is relatively closer to the end portion of the first bending plate 620 than the first notch 630 and the first coupling hole 640.

The secondary battery 1 according to some embodiments may further include a second current collector 700 and a second terminal 800.

The second current collector 700 may be arranged between the electrode assembly 200 and the cap plate 410 and connected to the second tab member 302. The second current collector 700 may function as a component that electrically connects the second tab member 302 to the second terminal 800. The second current collector 700 may be made of an electrically conductive material such as aluminum, copper, or nickel. The first current collector 500 and the second current collector 700 may be arranged to be spaced a distance (e.g., a set or predetermined distance) from each other in the second direction.

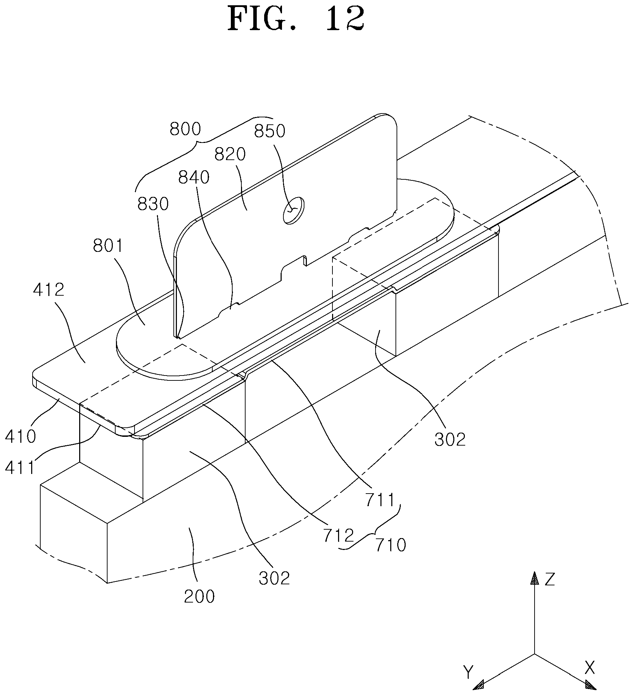

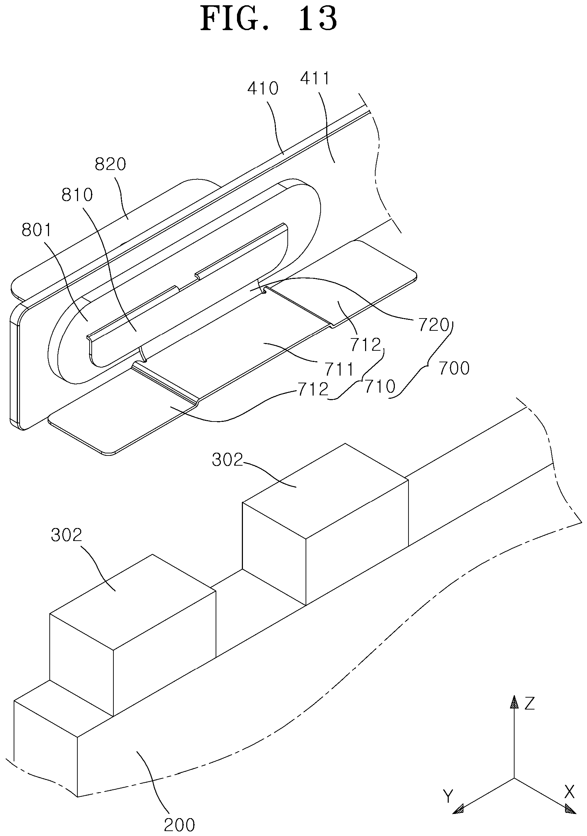

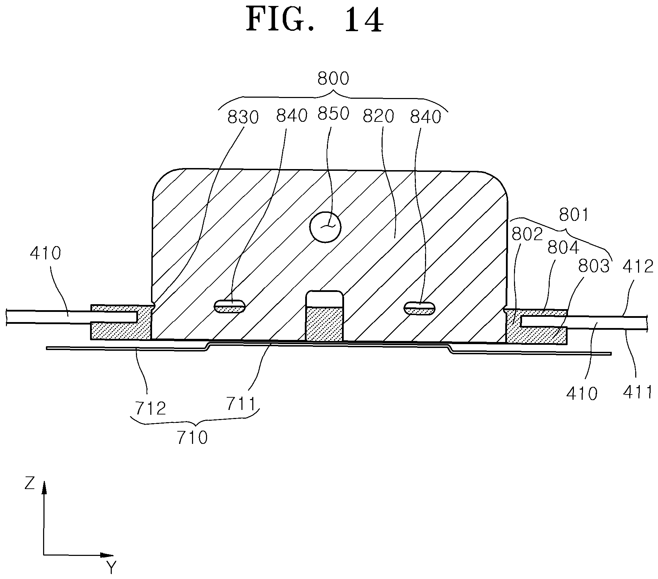

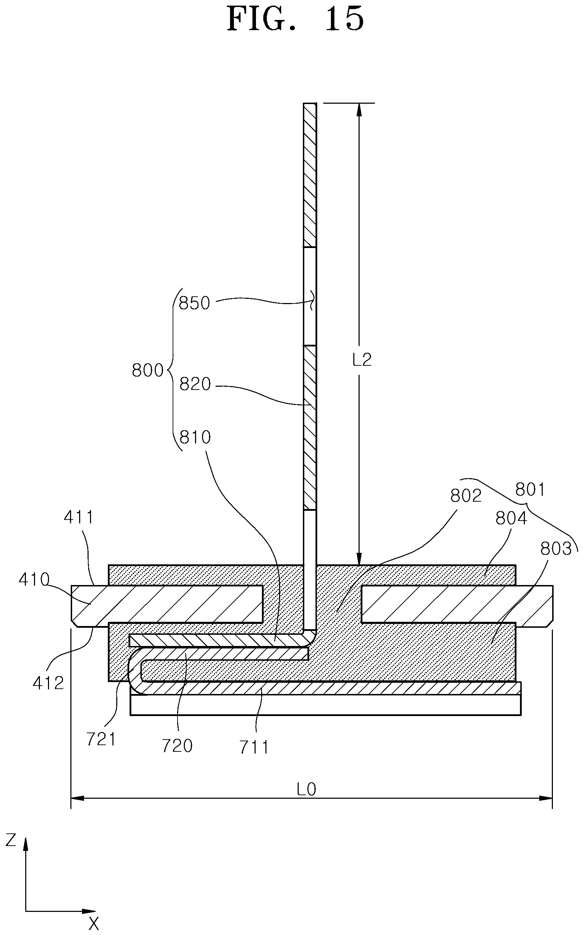

FIG. 12 is a schematic perspective view showing a configuration of a second current collector and a second terminal according to some embodiments of the present disclosure, FIG. 13 is an exploded perspective view of FIG. 12, FIG. 14 is a front view of FIG. 12, and FIG. 15 is a cross-sectional view of FIG. 12.

Referring to FIGS. 12 to 15, the second current collector 700 according to some embodiments may include a second current collecting plate 710 and a second connection member 720.

The second current collecting plate 710 may be arranged to face the second tab member 302 and may be in contact with the second tab member 302.

The second current collecting plate 710 according to some embodiments may include a second center plate 711 and a second extension plate 712.

The second center plate 711 may form a central exterior of the second current collecting plate 710 and support the second extension plate 712.

The second center plate 711 according to some embodiments may be arranged between the electrode assembly 200 and the cap plate 410. The second center plate 711 may be arranged to face the electrode assembly 200 in the first direction. As an example, the second center plate 711 may be arranged to face one surface of the electrode assembly 200 located between the pair of neighboring second tab members 302.

Both end portions of the second center plate 711 may extend toward the electrode assembly 200. The both end portions of the second center plate 711 may pass through the insulating plate 470 and may be located at a lower side of the insulating plate 470.

The second extension plate 712 may extend from the second center plate 711 and may be in contact with the second tab member 302.

The second extension plate 712 according to some embodiments may extend from the end portion of the second center plate 711 in a direction parallel to the second direction. The second extension plate 712 may be arranged to face the second tab member 302 in the first direction. The second extension plate 712 may be in contact with an end surface of the second tab member 302 arranged to face the cap plate 410.

A pair of second extension plates 712 may be provided. The pair of second extension plates 712 may extend from both end portions of the second center plate 711 in the second direction and in a direction opposite to the second direction, respectively. Each second extension plate 712 may be individually in contact with an end surface of one of different second tab members 302.

The second tab member 302 and the second extension plate 712 may be bonded by laser welding.

The second connection member 720 may be located between the second current collecting plate 710 and the second terminal 800. The second connection member 720 may support the second terminal 800 with respect to the second current collecting plate 710. That is, the second connection member 720 may function as a component that provides mechanical and electrical connection between the second current collecting plate 710 and the second terminal 800.

The second connecting member 720 according to some embodiments may have both end portions connected to the second center plate 711 and the second support plate 810 of the second terminal 800, respectively.

A second bending portion 721 that movably supports the second terminal 800 with respect to the second current collecting plate 710 may be formed on a central portion of the second connection member 720.

The second bending portion 721 according to some embodiments may be bent clockwise or counterclockwise around the second direction and may adjust the relative position of the second terminal 800 with respect to the second current collecting plate 710. As an example, as the second bending portion 721 is bent clockwise in FIG. 15, the second current collecting plate 710 and the second terminal 800 may be aligned in the first direction. Therefore, the secondary battery 1 according to some embodiments may align the relative position of the second terminal 800 with respect to the second current collecting plate 710 using only a bending operation of the second bending portion 721 without an additional bonding process of the second current collecting plate 710 and the second terminal 800. In FIG. 15, as the second bending portion 721 is unfolded counterclockwise, the second terminal 800 may move outward from the second current collecting plate 710, and an upper surface of the second current collecting plate 710 may be opened. Therefore, the second bending portion 721 can prevent or reduce instances of a welding device, etc., interfering with the second terminal 800 when the second current collecting plate 710 and the second tab member 302 are bonded.

The second terminal 800 may extend from the second current collector 700 to the outside of the cap plate 410. The second terminal 800 may function as a component that connects the secondary battery 1 to an external electrical device, for example, another secondary battery 1, a busbar, etc.

The second terminal 800 may be provided to be deformable. Therefore, the second terminal 800 may have an adjustable position or extending direction by deforming its own shape and may be directly connected to the first terminal 600 of the second terminal 800 of another secondary battery 1 or an external busbar. The second terminal 800 may be made of an electrically conductive material such as copper, aluminum, and nickel. The material of the second terminal 800 may be the same as the material of the second current collector 700 or alternatively, may differ from the material of the second current collector 700. The first terminal 600 and the second terminal 800 may be arranged to be spaced a distance (e.g., a set or predetermined distance) from each other in the second direction on the cap plate 410.

According to some embodiments, although an example in which both the first terminal 600 and the second terminal 800 may be deformed, the present disclosure is not limited thereto, and only the first terminal 600 or the second terminal 800 may be formed to be deformable.

The second terminal 800 according to some embodiments may include a second support plate 810 and a second bending plate 820.

The second support plate 810 may form a one side exterior of the second terminal 800 and support the second bending plate 820. The second support plate 810 may be connected to the second current collector 700.

The second support plate 810 according to some embodiments may be formed to have a flat plate shape (or a substantially flat plate shape). The second support plate 810 may be connected to the other end portion of the second connecting member 720 extending from the second center plate 711. The second support plate 810 may be manufactured separately from the second connecting member 720 and then connected to the second connecting member 720 by welding, etc. Alternatively, the second support plate 810 may be formed integrally with the second connecting member 720. The relative position of the second support plate 810 with respect to the second center plate 711 may be changed in conjunction with the bending operation of the second bending portion 721. The second support plate 810 may be arranged to be parallel to and face the second center plate 711 in the first direction as the second bending portion 721 is completely bent clockwise (see FIG. 15).

The second bending plate 820 may extend from the second support plate 810 and protrude outward from the cap plate 410.

The second bending plate 820 according to some embodiments may be arranged to intersect the second support plate 810. As an example, the second bending plate 820 may have a flat plate shape that extends from the second support plate 810 in the first direction in a state in which the second support plate 810 is arranged to be parallel to and face the second center plate 711 in the first direction. An end portion of the second bending plate 820 may vertically pass through the first surface 411 and the second surface 412 of the cap plate 410 in the first direction and protrude to an external space of the cap plate 410.

The second bending plate 820 may be provided to be bent around the second direction. The second bending plate 820 may be bent clockwise or counterclockwise with respect to an arbitrary straight line parallel to the second direction by an external force applied from a user, a tool, etc. During a bending operation of the second bending plate 820, the end portion of the second bending plate 820 may protrude outward from the cap plate 410 in the third direction or the direction opposite to the third direction. Therefore, the second bending plate 820 may be in contact with and connected to an electrical device located outside the cap plate 410, for example, a terminal of another secondary battery 1 or a busbar.

The second terminal 800 according to some embodiments may further include a second notch 830.

The second notch 830 may function to guide the bending operation of the second bending plate 820.

The second notch 830 according to some embodiments may have a groove shape that is concavely formed in a direction parallel to the second direction from an end surface of the second bending plate 820 perpendicular to the second direction. The second notch 830 may pass through both surfaces of the second bending plate 820 in the third direction. A length of the second bending plate 820 in the second direction may be relatively reduced in a region in which the second notch 830 is formed. Therefore, bending stress applied to the second bending plate 820 is concentrated on the second notch 830, and the bending operation of the second bending plate 820 may be consistently performed based on the second notch 830. A cross-sectional shape of the second notch 830 may be changed in design to have any of various shapes such as a polygon and oval other than the semicircular shape shown in FIG. 14.

A pair of second notches 830 may be provided. The pair of second notches 830 may be arranged symmetrically at both sides of the second bending plate 820. As an example, the pair of second notches 830 may be formed concavely in the direction opposite to the second direction from one end portion of the second bending plate 820 arranged to face the second direction, and the remaining second notch 830 may be formed concavely in the second direction from the other end portion of the second bending plate 820 arranged to face the direction opposite to the second direction. The pair of second notches 830 may be arranged to face each other in the second direction. That is, all center lines of the pair of second notches 830 may be arranged to be located on one straight line parallel to the second direction.

The secondary battery 1 according to some embodiments may further include a second gasket 801.

The second gasket 801 may electrically insulate the cap plate 410 and the second terminal 800. The second gasket 801 may block moisture or foreign substances from being introduced between the cap plate 410 and the second terminal 800. The second gasket 801 may be made of an insulating material such as polyethylene (PE), polypropylene (PP), polyethylene terephthalate (PET), or rubber. The second gasket 801 may be installed between the cap plate 410 and the second terminal 800 by insert injection molding.

The second gasket 801 according to some embodiments may include a second gasket body 802, a second inner gasket 803, and a second outer gasket 804.

The second gasket body 802 may form a central exterior of the second gasket 801.

The second gasket body 802 according to some embodiments may vertically pass through the first surface 411 and the second surface 412 of the cap plate 410. One end portion of the second gasket body 802 may protrude a distance (e.g., a set or predetermined distance) from the first surface 411 to the internal space of the case 100. The other end portion of the second gasket body 802 may protrude a distance (e.g., a set or predetermined distance) from the second surface 412 to the outside of the cap plate 410. The second gasket body 802 may be arranged to pass through the cap plate 410 and surround a lower end portion region of the second bending plate 820 positioned inside the cap plate 410.

The second inner gasket 803 may be arranged to extend from the second gasket body 802 and surround the second support plate 810.

The second inner gasket 803 according to some embodiments may be connected to the one end portion of the second gasket body 802 protruding to the inner space of the case 100. The second inner gasket 803 may be arranged to entirely surround the second support plate 810 facing the first surface 411 of the cap plate 410. A cross-sectional area of the second inner gasket 803 perpendicular to the first direction may be larger than a cross-sectional area of the second gasket body 802 perpendicular to the first direction. The second inner gasket 803 may be in contact with the first surface 411 of the cap plate 410. Therefore, the second inner gasket 803 may be in contact with the first surface 411 to prevent or reduce instances of the second gasket 801 being separated from the cap plate 410 in the first direction.

The second outer gasket 804 may be arranged to extend from the second gasket body 802 and surround the second bending plate 820.

The second outer gasket 804 according to some embodiments may be connected to the other end portion of the second gasket body 802 protruding outward from the cap plate 410. The second outer gasket 804 may be arranged to surround the second bending plate 820 protruding from the second surface 412 of the cap plate 410. A height of the second outer gasket 804 may be equal to or lower than a height of the center line of the second notch 830. Therefore, the second outer gasket 804 may not interfere with the bending operation of the second bending plate 820 by exposing all or part of the second notch 830 to the outside.

A cross-sectional area of the second outer gasket 804 perpendicular to the first direction may be larger than the cross-sectional area of the second gasket body 802 perpendicular to the first direction. The second outer gasket 804 may be in contact with the second surface 412 of the cap plate 410. Therefore, the second outer gasket 804 may be in contact with the second surface 412 to prevent or reduce instances of the second gasket 801 being separated from the cap plate 410 in the direction opposite to the first direction.

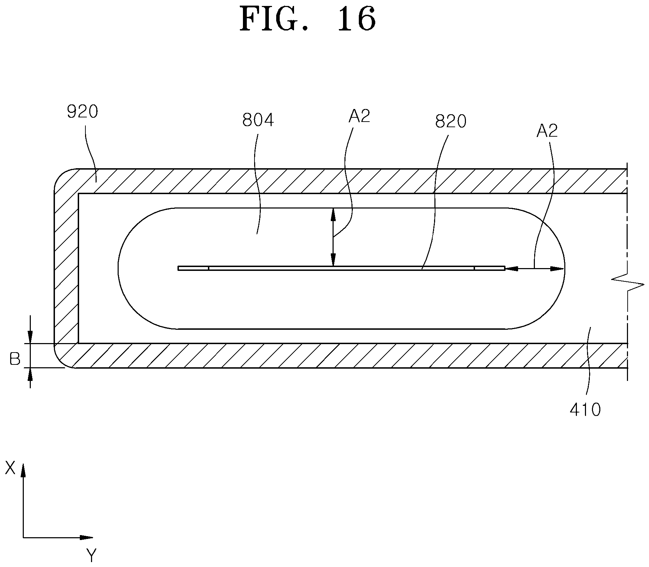

FIG. 16 is a schematic plan view showing the arrangement relationship between a second bending plate and a second gasket according to some embodiments of the present disclosure.

Referring to FIG. 16, a distance A2 from the second bending plate 820 to an outer peripheral surface of the second outer gasket 804 may be 3 mm or more. When the distance A2 from the second bending plate 820 to the outer peripheral surface of the second outer gasket 804 is smaller than 3 mm, electrical insulation between the cap plate 410 and the second terminal 800 cannot be sufficiently secured. Various designs are possible within a range in which the distance A2 from the second bending plate 820 to the outer peripheral surface of the second outer gasket 804 is 3 mm or more and is smaller than a distance from the second bending plate 820 to an edge of the cap plate 410.

A ratio (L2/L0) of a protrusion length L2 of the second bending plate 820 to a width L0 of the cap plate 410 may be larger than or equal to 0.5 and/or smaller than or equal to 1 (i. e., it may be L2/L0 ≥ 0.5 and/or L2/L0 ≤ 1). Here, when the second bending plate 820 is arranged parallel to the first direction, the protrusion length L2 of the second bending plate 820 may be a length from an upper surface of the second outer gasket 804 or the center line of the second notch 830 to the end portion of the second bending plate 820. When the ratio (L2/L0) of the protrusion length L2 of the second bending plate 820 to the width L0 of the cap plate 410 is smaller than 0.5, the length of the second bending plate 820 is excessively small, and thus smooth connection with an adjacent electrical device cannot be achieved. When the ratio (L2/L0) of the protrusion length L2 of the second bending plate 820 to the width L0 of the cap plate 410 is greater than 0.5, the length of the second bending plate 820 is excessively long, and thus there is a concern that the second bending plate 820 may interfere with an adjacent component.

The protrusion length L2 of the second bending plate 820 may be the same as or may differ from the protrusion length L1 of the first bending plate 620.

The second terminal 800 according to some embodiments may further include a second coupling hole 840.

The second coupling hole 840 may function to indicate a position for reinforcing coupling strength between the second bending plate 820 and the second gasket 801.

The second coupling hole 840 according to some embodiments may have a hole shape that passes through both surfaces of the second bending plate 820 in the third direction. The second gasket 801, for example, the second outer gasket 804 surrounding the second bending plate 820, may be inserted into the second coupling hole 840. Therefore, the second terminal 800 is coupled by being caught on the second gasket 801 in a direction intersecting the first direction, and relative movement of the second terminal 800 with respect to the second gasket 801 can be prevented or reduced.

The second coupling hole 840 may be arranged to face the second notch 830 in the second direction. As an example, the second coupling hole 840 may be located between the pair of second notches 830. Therefore, the second coupling hole 840 may reinforce the coupling strength between the second bending plate 820 and the second gasket 801 and at the same time, guide the bending operation of the second bending plate 820 together with the second notch 830.

A plurality of second coupling holes 840 may be provided. The plurality of second coupling holes 840 may be arranged at set intervals in the second direction.

The second terminal 800 according to some embodiments may further include a second alignment hole 850.

The second alignment hole 850 may function to indicate a position at which a tool for fixing the second terminal 800 is fastened during the insert injection molding of the second gasket 801 or a connection process between the second terminal 800 and an external electrical device.

The second alignment hole 850 according to some embodiments may have a hole shape that passes through both surfaces of the second bending plate 820 in the third direction. A height of the second alignment hole 850 may be greater than the heights of the second notch 830 and the second coupling hole 840. That is, the second alignment hole 850 may be located at a position that is relatively closer to the end portion of the second bending plate 820 than the second notch 830 and the second coupling hole 840.

The secondary battery 1 according to some embodiments may further include an insulating member 900.

The insulating member 900 may be arranged to surround the case 100 and the cap plate 410. The insulating member 900 may be made of an insulating material such as polyethylene (PE), polypropylene (PP), polyethylene terephthalate (PET), or rubber. Therefore, the insulating member 900 may function as a component that secures external insulation of the secondary battery 1.

The insulating member 900 according to some embodiments may include a first insulating member 910 and a second insulating member 920.

The first insulating member 910 may be arranged to surround the case 100. The first insulating member 910 according to some embodiments may be arranged to entirely cover the outer surfaces of the bottom portion 110, the front portion 120, the back portion 130, the first side portion 140, and the second side portion 150 of the case 100. The first insulating member 910 may be fixed to the outer surface of the case 100 by any of various types of coupling methods such as bonding and pressing methods.

The second insulating member 920 may be arranged to extend from the first insulating member 910 and surround the cap plate 410. The second insulating member 920 according to some embodiments may extend from an upper end portion of the first insulating member 910 parallel to the cap plate 410. The second insulating member 920 may be arranged to cover an edge region of the second surface 412 of the cap plate 410. The second insulating member 920 may be fixed to the second surface 412 of the cap plate 410 by any of various types of coupling methods such as bonding and pressing methods. Therefore, the first insulating member 910 and the second insulating member 920 may be arranged to entirely surround the bonded portion of the case 100 and the cap plate 410, thereby further reinforcing coupling strength between the case 100 and the cap plate 410.

A width B of the second insulating member 920 covering the second surface 412 of the cap plate 410 may be 1 mm or more. Here, the width B of the second insulating member 920 may be a gap between an outer peripheral surface and inner peripheral surface of the second insulating member 920 parallel to the second direction or the third direction. Various designs are possible within a range in which the width B of the second insulating member 920 is 1 mm or more and the second insulating member 920 is not in direct contact with the first gasket 601 and the second gasket 801.

Hereinafter, a battery pack according to some embodiments of the present disclosure will be described.

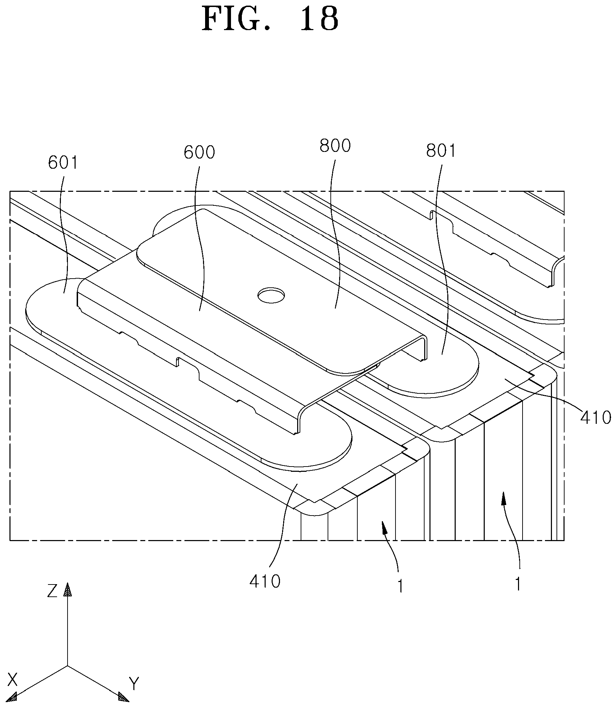

FIG. 17 is a schematic perspective view showing a configuration of a battery pack according to some embodiments of the present disclosure, and FIG. 18 is a schematic enlarged view showing an electrical connection configuration of the battery pack according to some embodiments of the present disclosure.

Referring to FIGS. 1 to 18, the battery pack according to some embodiments may include a secondary battery 1, a housing 2, and a holder 3.

The secondary battery 1 may be configured in the same manner as the secondary battery 1 described in FIGS. 1 to 16.

The housing 2 may form a rough exterior of the battery pack and provide a space in which the secondary battery 1 may be accommodated.

The housing 2 according to some embodiments may include a housing body 21 and a cover 22.

The housing body 21 may be formed to have a box shape which is hollow and has an open one side. A cross-sectional shape of the housing body 21 is not limited to a quadrangular shape shown in FIG. 17, and may be changed in design to have any of various shapes such as a polygon, circle, and oval.

The cover 22 may be coupled to the housing body 21 and close an internal space of the housing body 21. For example, the cover 22 may be formed to have a plate shape (or a substantially plate shape) and arranged to face the open one side of the housing body 21. The cover 22 may be fixed to the housing body 21 by any of various types of coupling methods such as bolting, welding, and fitting methods.

A plurality of secondary batteries 1 may be provided in the battery pack according to the present embodiment. The plurality of secondary batteries 1 may be arranged in two columns or more in at least one of a longitudinal direction of the housing 2, that is, the third direction or a width direction, that is, the second direction. Although FIG. 17 shows an example in which the plurality of secondary batteries 1 are arranged in eight columns in the third direction, the arrangement form of the plurality of secondary batteries 1 is not limited thereto and may be changed in design to have any of various forms. The plurality of secondary batteries 1 may be arranged in parallel. The number of secondary batteries 1 may be variously changed in design depending on the size, shape, etc., of the housing 2.

The holder 3 may support a substrate, sensor, etc., for measuring a voltage and temperature of the secondary battery 1 inside the housing 2.

The holder 3 according to some embodiments may be formed to have a flat plate shape. The holder 3 may be located between the cover 22 and the secondary battery 1. The holder 3 may include an electrically insulating polymer compound material.

The holder 3 may be formed with a holder vent hole 32 that is arranged to face the vent hole 440 of the secondary battery 1. A plurality of holder vent holes 32 may be provided and arranged in the third direction. Each holder vent hole 32 may be individually arranged to face the vent hole 41 of a different secondary battery 1.

A terminal hole 31 into which the first terminal 600 and the second terminal 800 of the secondary battery 1 are inserted may be formed in the holder 3. A plurality of terminal holes 31 may be provided. The plurality of terminal holes 31 may be individually arranged at positions at which the first terminal 600 and the second terminal 800 of one of different secondary batteries 1 may be inserted.

According to some embodiments, the first terminal 600 of one of the pair of neighboring secondary batteries 1 and the second terminal 800 of the other secondary battery 1 may be arranged to face each other in the third direction. The front portion 120 of one of the neighboring secondary batteries 1 may be arranged to face the back portion 130 of the other secondary battery 1. Therefore, according to some embodiments, the first terminals 600 and the second terminals 800 of different secondary batteries 1 may be arranged alternately in the third direction.

According to some embodiments, the first terminal 600 of one of the secondary batteries 1 arranged adjacent to each other may be directly connected to the second terminal 800 of the other secondary battery 1.

For example, the first bending plate 620 of the first terminal 600 of one of the secondary batteries 1 arranged adjacent to each other may be bent around the second direction toward the second terminal 800 of the other secondary battery 1. In addition, the second bending plate 820 of the second terminal 800 of the other of the pair of secondary batteries 1 arranged adjacent to each other may be bent around the second direction toward the first terminal 600 of one of the pair of secondary batteries 1.

The first bending plate 620 of one of the pair of secondary batteries 1 arranged adjacent to each other may be electrically in contact with the second bending plate 820 of the other. The first bending plate 620 of one of the pair of secondary batteries 1 arranged adjacent to each other and the second bending plate 820 of the other may be electrically and mechanically connected by any of various types of coupling methods such as welding and bolting methods. Therefore, the battery pack according to some embodiments may electrically connect the pair of secondary batteries 1 adjacent to each other without a busbar, thereby relatively reducing the number of parts and relatively reducing manufacturing cost.

However, the present disclosure is not limited thereto, and the first terminal 600 of one of the pair of secondary batteries 1 adjacent to each other and the second terminal 800 of the other secondary battery 1 may be arranged to face each other in the longitudinal direction of the housing 2. In this case, for example, the first terminal 600 of one of the pair of secondary batteries 1 adjacent to each other may be connected to the first terminal 600 of the other secondary battery 1.

According to some embodiments of the present disclosure, because terminals of different secondary batteries can be directly connected without a busbar by deforming one terminal extending outward from a cap plate, it may be possible to relatively reduce the number of parts for electrical connection, lower contact resistance between parts, and relatively reduce manufacturing cost.

However, the characteristics of embodiments according to the present disclosure are not limited to the above characteristics, and other technical effects that are not mentioned will be clearly understood by those skilled in the art from the following description of the present disclosure.

While aspects of some embodiments of the present disclosure have been described with reference to embodiments shown in the drawings, these embodiments are merely illustrative, and it should be understood that various modifications and equivalent other embodiments can be derived by those skilled in the art on the basis of the embodiments without departing from the scope of the present invention as defined by the independent claims.

## Claims

1. A secondary battery (1) comprising:
a case (100);
an electrode assembly (200) inside the case (100) and having a first electrode (210) and a second electrode (220);
a first tab member (301) connected to the first electrode (210) and extending from the electrode assembly (200);
a cap plate (410) coupled to the case (100) and facing the electrode assembly (200);
a first current collector (500) between the electrode assembly (200) and the cap plate (410) and connected to the first tab member (301); and
a first terminal (600) extending from the first current collector (500) and configured to be deformable.

2. The secondary battery (1) as claimed in claim 1, wherein the first terminal (600) comprises:
a first support plate (610) connected to the first current collector (500); and
a first bending plate (620) extending from the first support plate (610) in a first direction (Z) and protruding outward from the cap plate (410), and
the first bending plate (620) is bendable around a virtual axis parallel to a second direction (Y), the second direction (Y) intersecting the first direction (Z).

3. The secondary battery (1) as claimed in claim 2, wherein the first support plate (610) and the first bending plate (620) intersect each other.

4. The secondary battery (1) as claimed in claim 2 or 3, wherein a ratio (L1/L0) of a protrusion length (L1) of the first bending plate (620) to a width (L0) of the cap plate (410) has a minimum value of 0.5 and a maximum value of 1.

5. The secondary battery (1) as claimed in any one of claims 2 to 4, wherein the first terminal (600) further comprises a first notch (630) that is concavely formed from the first bending plate (620) in a direction parallel to the second direction (Y).

6. The secondary battery (1) as claimed in any one of claims 1 to 5, wherein the first current collector (500) comprises:
a first current collecting plate (510) facing the first tab member (301) and in contact with the first tab member (301); and
a first connection member (520) between the first current collecting plate (510) and the first terminal (600) and supporting the first terminal (600) with respect to the first current collecting plate (510).

7. The secondary battery (1) as claimed in any one of claims 1 to 6, further comprising a first gasket (601) between the cap plate (410) and the first terminal (600).

8. The secondary battery (1) as claimed in claim 7, as far as depending on claim 2, wherein the first gasket (601) comprises:
a first gasket body (602) passing through the cap plate (410);
a first inner gasket (603) extending from the first gasket body (602) and surrounding the first support plate (610); and
a first outer gasket (604) extending from the first gasket body (602) and surrounding the first bending plate (620).

9. The secondary battery (1) as claimed in claim 8, wherein cross-sectional areas of the first inner gasket (603) and the first outer gasket (604) are larger than a cross-sectional area of the first gasket body (602).

10. The secondary battery (1) as claimed in any one of claims 7 to 9, wherein the first terminal (600) further comprises a first coupling hole (640) which passes through the first bending plate (620) and into which the first gasket (601) is inserted.

11. The secondary battery (1) as claimed in claim 10, as far as depending from claim 5, wherein the first coupling hole (640) faces the first notch (630) in the second direction.

12. The secondary battery (1) as claimed in any one of claims 1 to 11, further comprising:
a second tab member (302) connected to the second electrode (220) and extending from the electrode assembly (200);
a second current collector (700) between the electrode assembly (200) and the cap plate (410) and connected to the second tab member (302); and
a second terminal (800) extending from the second current collector (700) and provided to be deformable.

13. The secondary battery (1) as claimed in any one of claims 1 to 12, further comprising an insulating member (900) surrounding the case (100) and the cap plate (410).

14. A battery pack comprising:
a housing (2); and
a plurality of secondary batteries (1) inside the housing (2),
wherein each of the secondary batteries (1) comprises:
a case (100);
an electrode assembly (200) inside the case (100) and having a first electrode (210) and a second electrode (220);
a first tab member (301) connected to the first electrode (210) and extending from the electrode assembly (200);
a cap plate (410) coupled to the case (100) and facing the electrode assembly (200);
a first current collector (500) between the electrode assembly (200) and the cap plate (410) and connected to the first tab member (301); and
a first terminal (600) extending from the first current collector (500) and configured to be deformable.

15. The battery pack as claimed in claim 14, wherein the each of the secondary batteries (1) further comprises a second terminal (800) connected to the second electrode (220) and spaced apart from the first terminal (600), and
the first terminal (600) of one secondary battery (1) is directly connected to the first terminal (600) or the second terminal (800) of another secondary battery (1).
